# FASCICULE DE BREVET EUROPEEN

(11) **EP 2 234 865 B1**
(45) Date de publication et mention de la délivrance du brevet: **20.11.2013**
(21) Numéro de dépôt: 09705582.6
(22) Date de dépôt: 15.01.2009
(51) Int. Cl.: B62D 25/04, B62D 25/02

(54) **STRUCTURE DE VEHICULE AUTOMOBILE**
STRUKTUR FÜR KRAFTFAHRZEUG
STRUCTURE FOR AUTOMOBILE

(30) Priorité: 28.01.2008 FR 0850504
(43) Date de publication de la demande: 06.10.2010
(73) Titulaire: Peugeot Citroën Automobiles SA, 78140 Vélizy-Villacoublay (FR)
(72) Inventeur: GAVILLON, Paul, F-25490 Dampierre les Bois (FR); MULLER, Franck, F-25150 Pont de Roide (FR)
(74) Mandataire: Allain, Laurent
(86) Numéro de dépôt international: PCT/FR2009/050053
(87) Numéro de publication internationale: WO 2009/095575

(56) Documents cités:
- EP-A- 1 270 377
- WO-A-02/070322
- DE-A1-102004 032 599
- JP-A- 58 036 769

## Description

La présente invention est relative à une structure de véhicule automobile, du type comprenant un pied avant et un longeron fixé au pied avant suivant une jonction, un élément parmi le pied avant et le longeron comportant une paroi d'extrémité qui referme au moins partiellement la section d'extrémité dudit élément située au voisinage de la jonction.

L'invention concerne également un véhicule automobile comportant une telle structure.

Généralement, le pied avant est situé de chaque côté du véhicule, entre un passage de roue avant et une ouverture de porte avant, et le longeron, situé de chaque côté du véhicule entre le passage de roue avant et un passage de roue arrière, est fixé à une extrémité arrière inférieure du pied avant.

Le document FR 2 800 698 A1 décrit un pied avant de véhicule automobile, qui intègre en une unique pièce un corps central allongé comportant à chacune de ses extrémités un support d'extrémité de poutre. Le corps central a sensiblement la forme d'un « L » et une section d'allure générale en « U ». Chaque support d'extrémité de poutre comporte une paroi contre laquelle l'extrémité de la poutre associée vient en butée. La paroi d'extrémité située au voisinage d'une jonction entre le pied avant et un longeron vient refermer l'extrémité inférieure du pied du « L ». La paroi d'extrémité est sensiblement perpendiculaire au corps central allongé.

La réalisation du pied avant en une seule pièce permet ainsi de faciliter l'assemblage du véhicule.

Toutefois, avec le pied avant décrit dans le document FR 2 800 698 A1, la rigidité de la structure n'est pas optimisée pour un choc latéral.

Le document JP58036769 A décrit une jonction d'un pied avant et un longeron, renfermant une parois oblique, afin de renforcer la jonction.

L'invention a pour but de rigidifier la zone située au voisinage de la jonction entre le pied avant et le longeron, en cas de choc latéral, afin de réduire les risques de lésion des passagers du véhicule.

A cet effet, l'invention a pour objet une structure de véhicule automobile du type précité, caractérisée en ce que ladite paroi d'extrémité dudit élément présente une section verticale, selon la direction longitudinale, ayant une forme arrondie convexe en C.

Suivant d'autres modes de réalisation, la structure comprend une ou plusieurs des caractéristiques suivantes, prises isolément ou suivant toutes les combinaisons techniquement possibles :
- la paroi d'extrémité présente une section verticale, selon la direction longitudinale, sensiblement en forme de demi-cercle,
- la paroi d'extrémité dudit élément est inclinée par rapport à un plan vertical transversal,
- l'angle d'inclinaison entre la paroi d'extrémité et ledit plan vertical transversal, est compris entre 30° et 45°,
- le pied avant comporte une demi-coque extérieure de pied avant et une demi-coque intérieure de pied avant délimitant entre elles une structure en caisson allongée de section transversale fermée,
- le longeron comporte une demi-coque extérieure de longeron et une demi-coque intérieure de longeron délimitant entre elles une structure en caisson allongée de section transversale fermée,
- la paroi d'extrémité comprend une portion d'extrémité d'au moins une demi-coque de pied avant refermant la section d'extrémité de cette demi-coque,
- la paroi d'extrémité comprend une portion d'extrémité d'au moins une demi-coque de longeron refermant la section d'extrémité de cette demi-coque,
- ledit élément est réalisé par emboutissage d'un flan de tôle.

L'invention a également pour objet un véhicule automobile, caractérisé en ce qu'il comporte une structure telle que définie ci-dessus.

L'invention et ses avantages seront mieux compris à la lecture de la description qui va suivre, donnée uniquement à titre d'exemple, faite en référence aux dessins annexés, sur lesquels :
- la figure 1 est une vue partielle en perspective, depuis l'intérieur du véhicule, d'une structure selon l'invention,
- la figure 2 est une vue en coupe transversale selon la ligne II-II de la figure 1, et
- la figure 3 est une vue analogue à la figure 1 de la structure selon un autre mode de réalisation de l'invention.

Dans la suite de la description, les termes « avant », « arrière », « droite », « gauche », « haut », « bas », « longitudinal », « transversal » et « vertical » s'entendent par référence au système d'axes orthogonal usuel des véhicules automobiles représenté sur les figures et possédant :
- un axe longitudinal X dirigé de l'arrière vers l'avant,
- un axe transversal Y dirigé de la droite vers la gauche, et
- un axe vertical Z dirigé du bas vers le haut.

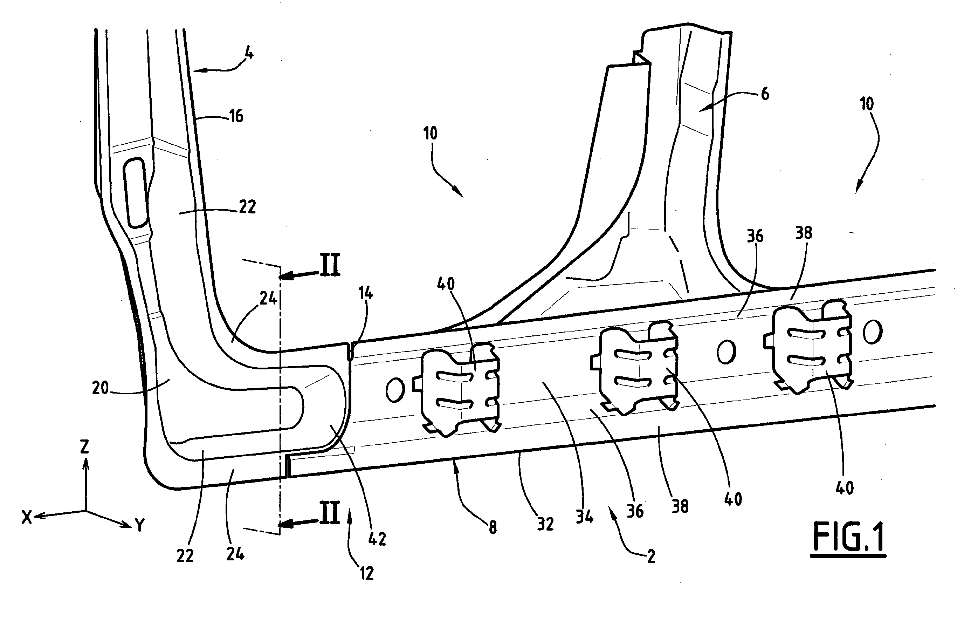

Sur la figure 1, une caisse 2 d'un véhicule automobile comporte, de manière classique et de chaque côté, un pied avant 4, un pied milieu 6 et un pied arrière non représenté. Les pieds 4, 6 forment chacun une structure en caisson allongée sensiblement verticalement et sont reliés entre eux en partie supérieure par un montant de baie et un arc de pavillon non représentés, et en partie inférieure par un longeron 8.

Les éléments mentionnés ci-dessus délimitent deux ouvertures 10 destinées à recevoir chacune un ouvrant latéral non représenté.

Le pied avant 4 et le longeron 8 fixé au pied avant 4 suivant une jonction 14 font partie d'une structure 12 du véhicule automobile.

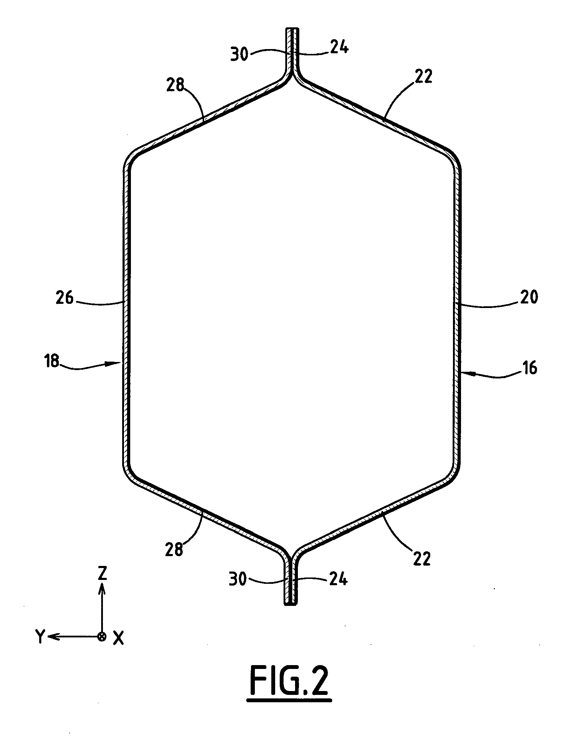

Comme le montre la figure 2, le pied avant 4 comporte une demi-coque extérieure 16 et une demi-coque intérieure 18, délimitant entre elles la structure en caisson fermé du pied avant 4.

La demi-coque extérieure 16 du pied avant, également appelée renfort de pied avant, possède une section transversale en U ouverte vers l'intérieur du véhicule, et comprend une âme 20 sensiblement verticale et deux ailes 22 s'étendant obliquement vers l'intérieur du véhicule à partir de l'âme 20. Chaque aile 22 est munie d'un bord 24 replié vers l'extérieur de la demi-coque. Les deux bords 24 sont verticaux et coplanaires.

La demi-coque intérieure 18 du pied avant, également appelée doublure arrière d'aile avant, possède une section transversale en U ouverte vers l'extérieur du véhicule, et comprend une âme 26 sensiblement verticale et deux ailes 28 s'étendant obliquement vers l'extérieur du véhicule à partir de l'âme 26. Chaque aile 28 est munie d'un bord 30 replié vers l'extérieur de la demi-coque. Les deux bords 30 sont verticaux et coplanaires.

Les demi-coques 16, 18 sont réalisées par emboutissage de flans de tôle. La demi-coque extérieure 16 et la demi-coque intérieure 18 sont soudées entre elles le long de leurs bords 24, 30 pour former le pied avant 4.

Sur la figure 1, le longeron 8 comporte une demi-coque extérieure 32 et une demi-coque intérieure non représentée, délimitant entre elles une structure en caisson allongée de section transversale fermée.

La demi-coque extérieure 32 du longeron, également appelée longeron extérieur, possède une section transversale en U ouverte vers l'intérieur du véhicule, et comprend une âme 34 sensiblement verticale, s'étendant longitudinalement, et deux ailes 36 s'étendant obliquement vers l'intérieur du véhicule à partir de l'âme 34. Chaque aile 36 est munie d'un bord 38 replié vers l'extérieur de la demi-coque 32. Les deux bords 38 sont verticaux et coplanaires.

La demi-coque intérieure, non représentée, du longeron 8, également appelée longeron intérieur, possède une section transversale en U ouverte vers l'extérieur du véhicule. La demi-coque intérieure comprend également une âme sensiblement verticale, s'étendant longitudinalement, et deux ailes s'étendant obliquement vers l'extérieur du véhicule à partir de l'âme. Chaque aile est munie d'un bord replié vers l'extérieur de la demi-coque ; les deux bords sont verticaux et coplanaires.

Les demi-coques 32 du longeron sont réalisées par emboutissage de flans de tôle. Les demi-coques 32 sont soudées entre elles le long de leurs bords 38 pour former le longeron 8.

Le longeron 8 comporte également des pièces de renfort 40, également appelées cloisons de longeron, destinées à rigidifier le longeron 8 en cas de choc latéral. Chaque pièce de renfort 40 est fixée intérieurement au longeron 8 entre ses deux demi-coques. Les pièces de renfort 40 sont espacées les unes des autres selon la direction longitudinale.

Chaque demi-coque du pied avant 4 comporte une paroi ou portion d'extrémité 42, les deux parois 42 refermant la section d'extrémité du pied avant 4 située au voisinage de la jonction 14. Chaque paroi d'extrémité 42 présente une section verticale, selon la direction longitudinale, sensiblement en forme d'un demi-cercle convexe.

Chaque paroi d'extrémité 42 est inclinée par rapport à un plan vertical transversal correspondant, et l'angle d'inclinaison est compris entre 30° et 45°.

Chaque paroi d'extrémité 42 relie les deux ailes 22, 28 de la demi-coque correspondante, dans la zone située à proximité de l'extrémité arrière inférieure du pied avant 4.

Ainsi, les parois d'extrémité 42 permettent de rigidifier la structure 12 au voisinage de la jonction 14 en cas de choc latéral.

La forme des parois d'extrémité 42 permet de se rapprocher d'une forme de fin de pièce sphérique, ce qui donne un maximum de rigidité à la structure 12 au voisinage de la jonction 14 entre le pied avant 4 et le longeron 8.

Par ailleurs, la forme des parois d'extrémité 42 permet également de faciliter l'emboutissage des demi-coques 16, 18 du pied avant, qui peuvent alors être réalisées en tôle à très haute limite élastique. Un gain de masse est ainsi réalisé.

Enfin, la forme des parois d'extrémité 42 selon l'invention permet de garantir une meilleure qualité géométrique de la pièce emboutie, en diminuant les risques de vrillage de la pièce.

En variante, une seule demi-coque parmi la demi-coque extérieure 16 et la demi-coque intérieure 18 du pied avant 4 comporte une paroi d'extrémité 42.

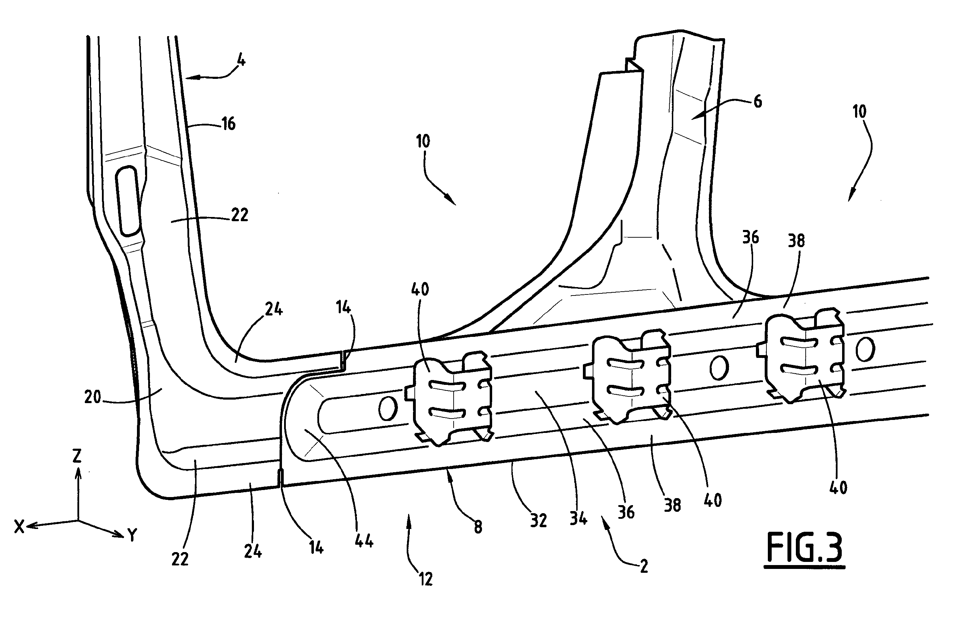

La figure 3 illustre un autre mode de réalisation, pour lequel les éléments analogues au mode de réalisation décrit précédemment, sont repérés par des références identiques.

Chaque demi-coque du longeron 8 comporte une paroi ou portion d'extrémité 44, les deux parois 44 refermant la section d'extrémité du longeron 8 située au voisinage de la jonction 14. Chaque paroi d'extrémité 44 présente une section verticale, selon la direction longitudinale, sensiblement en forme de demi-cercle convexe.

Chaque paroi d'extrémité 44 est inclinée par rapport à un plan vertical transversal correspondant, et l'angle d'inclinaison est compris entre 30° et 45°.

Chaque paroi d'extrémité 44 relie les ailes de la demi-coque correspondante du longeron 8, dans la zone située à proximité de l'extrémité avant du longeron 8.

Le fonctionnement de ce deuxième mode de réalisation est identique à celui du premier mode de réalisation et n'est donc pas décrit à nouveau.

En variante, une seule demi-coque parmi la demi-coque extérieure 32 et la demi-coque intérieure non représentée, du longeron 8 comporte une paroi d'extrémité 44.

## Revendications

1. Structure (12) de véhicule automobile, du type comprenant un pied avant (4) et un longeron (8) fixé au pied avant (4) suivant une jonction (14), un élément parmi le pied avant (4) et le longeron (8) comportant une paroi d'extrémité (42 ; 44) qui referme au moins partiellement la section d'extrémité dudit élément située au voisinage de la jonction (14), ladite structure (12) étant **caractérisée en ce que** ladite paroi d'extrémité (42 ; 44) dudit élément présente une section verticale, selon la direction longitudinale, ayant une forme arrondie convexe en C.

2. Structure (12) selon la revendication 1, **caractérisée en ce que** ladite paroi d'extrémité (42 ; 44) présente une section verticale, selon la direction longitudinale, sensiblement en forme de demi-cercle.

3. Structure (12) selon la revendication 1 ou 2, **caractérisée en ce que** la paroi d'extrémité (42 ; 44) dudit élément est inclinée par rapport à un plan vertical transversal.

4. Structure (12) selon la revendication 3, **caractérisée en ce que** l'angle d'inclinaison entre la paroi d'extrémité (42 ; 44) et ledit plan vertical transversal, est compris entre 30° et 45°.

5. Structure (12) selon l'une quelconque des revendications précédentes, **caractérisée en ce que** le pied avant (4) comporte une demi-coque extérieure de pied avant (16) et une demi-coque intérieure de pied avant (18) délimitant entre elles une structure en caisson allongée de section transversale fermée.

6. Structure (12) selon l'une quelconque des revendications précédentes, **caractérisée en ce que** le longeron (8) comporte une demi-coque extérieure de longeron (32) et une demi-coque intérieure de longeron délimitant entre elles une structure en caisson allongée de section transversale fermée.

7. Structure (12) selon l'une quelconque des revendications 1 à 4, prise avec la revendication 5, **caractérisée en ce que** ladite paroi d'extrémité comprend une portion d'extrémité (42) d'au moins une demi-coque de pied avant (16, 18) refermant la section d'extrémité de cette demi-coque (16, 18).

8. Structure (12) selon l'une quelconque des revendications 1 à 4, prise avec la revendication 6, **caractérisée en ce que** ladite paroi d'extrémité comprend une portion d'extrémité (44) d'au moins une demi-coque de longeron (32) refermant la section d'extrémité de cette demi-coque (32).

9. Structure (12) selon l'une quelconque des revendications précédentes, **caractérisée en ce que** ledit élément est réalisé par emboutissage d'un flan de tôle.

10. Véhicule automobile **caractérisé en ce qu'**il comporte une structure (12) selon l'une quelconque des revendications précédentes.

## Patentansprüche

1. Struktur (12) eines Kraftfahrzeugs des Typs, die einen Vorderständer (4) und einen Längsträger (8), der an dem Vorderständer (4) entlang einer Verbindung (14) befestigt ist, aufweist, wobei ein Element aus dem Vorderständer (4) oder dem Längsträger (8) eine Endwand (42; 44) aufweist, die mindestens teilweise den Querschnitt des Elements in der Nähe der Verbindung (14) verschließt, wobei die Struktur (12) **dadurch gekennzeichnet ist, dass** die Endwand (42; 44) des Elements einen vertikalen Querschnitt entlang der Längsrichtung aufweist, der eine gerundete konvexe C-Form hat.

2. Struktur (12) nach Anspruch 1, **dadurch gekennzeichnet, dass** die Endwand (42; 44) einen vertikalen Querschnitt entlang der Längsrichtung im Wesentlichen in Halbkreisform aufweist.

3. Struktur (12) nach Anspruch 1 oder 2, **dadurch gekennzeichnet, dass** die Endwand (42; 44) des Elements in Bezug zu einer vertikalen Querebene geneigt ist.

4. Struktur (12) nach Anspruch 3, **dadurch gekennzeichnet, dass** der Neigungswinkel zwischen der Endwand (42; 44) und der vertikalen Querebene zwischen 30° und 45° liegt.

5. Struktur (12) nach einem der vorhergehenden Ansprüche, **dadurch gekennzeichnet, dass** der Vorderständer (4) eine äußere Vorderfuß-Halbschale (16) und eine innere Vorderfuß-Halbschale (18) aufweist, die untereinander eine längliche Kastenstruktur mit geschlossenem Querschnitt aufweisen.

6. Struktur (12) nach einem der vorhergehenden Ansprüche, **dadurch gekennzeichnet, dass** der Längsträger (8) eine äußere Längsträger-Halbschale (32) und eine innere Längsträger-Halbschale aufweist, die untereinander eine längliche Kastenstruktur mit geschlossenem Querschnitt aufweisen.

7. Struktur (12) nach einem der Ansprüche 1 bis 4, mit dem Anspruch 5 genommen, **dadurch gekennzeichnet, dass** die Endwand einen Endabschnitt (42) mindestens einer Vorderfuß-Halbschale (16, 18), der den Endquerschnitt der Halbschale (16, 18) verschließt, aufweist.

8. Struktur (12) nach einem der Ansprüche 1 bis 4, mit dem Anspruch 6 genommen, **dadurch gekennzeichnet, dass** die Endwand einen Endabschnitt (44) mindestens einer Längsträger-Halbschale (32), die den Endabschnitt dieser Halbschale (32) verschließt, aufweist.

9. Struktur (12) nach einem der vorhergehenden Ansprüche, **dadurch gekennzeichnet, dass** das Element durch Stanzen eines Blechteils hergestellt ist.

10. Kraftfahrzeug, **dadurch gekennzeichnet, dass** es eine Struktur (12) nach einem der vorhergehenden Ansprüche aufweist.

## Claims

1. A structure (12) for an automobile, of the type including a front pillar (4) and a side rail (8) fixed to the front pillar (4) along a junction (14), one element of the front pillar (4) and the side rail (8) comprising an end wall (42; 44) which closes at least partially the end section of said element situated in the vicinity of the junction (14), said structure (12) being **characterized in that** said end wall (42; 44) of said element has a vertical section, along the longitudinal direction, having a rounded convex C shape.

2. The structure (12) according to Claim 1, **characterized in that** said end wall (42; 44) has a vertical section, along the longitudinal direction, substantially in the shape of a semicircle.

3. The structure (12) according to Claim 1 or 2, **characterized in that** the end wall (42; 44) of said element is inclined with respect to a transverse vertical plane.

4. The structure (12) according to Claim 3, **characterized in that** the angle of inclination between the end wall (42; 44) and said transverse vertical plane is comprised between 30° and 45°.

5. The structure (12) according to any one of the preceding claims, **characterized in that** the front pillar (4) comprises a front pillar exterior half-shell (16) and a front pillar interior half-shell (18) delimiting between them an elongated box structure of closed transverse section.

6. The structure (12) according to any one of the preceding claims, **characterized in that** the side rail (8) comprises a side rail exterior half-shell (32) and a side rail interior half-shell delimiting between them an elongated box structure of closed transverse section.

7. The structure (12) according to any one of Claims 1 to 4, taken with Claim 5, **characterized in that** said end wall includes an end portion (42) of at least one front pillar half-shell (16, 18) closing the end section of this half-shell (16, 18).

8. The structure (12) according to any one of Claims 1 to 4, taken with Claim 6, **characterized in that** said end wall includes an end portion (44) of at least one side rail half-shell (32) closing the end section of this half-shell (32).

9. The structure (12) according to any one of the preceding claims, **characterized in that** said element is realized by stamping of a sheet metal blank.

10. An automobile **characterized in that** it comprises a structure (12) according to any one of the preceding claims.
